# EUROPEAN PATENT SPECIFICATION

(11) **EP 2 772 422 B1**
(45) Date of publication and mention of the grant of the patent: **05.04.2017**
(21) Application number: 14157137.2
(22) Date of filing: 28.02.2014
(51) Int. Cl.: B62M 6/70, B62M 6/60

(54) **Power-assisted electric bike**
Kraftunterstütztes Elektrofahrrad
Vélo électrique assisté

(30) Priority: 28.02.2013 CN 201320095137 U
(43) Date of publication of application: 03.09.2014
(73) Proprietor: Homevelo Technologies Co., Limited, Kowloon Bay, Hong Kong (HK)
(72) Inventor: Yip, Wai Kuen, Kowloon Bay (HK)
(74) Representative: Berkkam, Ayfer

(56) References cited:
- CN-U- 202 754 094
- DE-U1- 29 610 696
- JP-A- 2007 230 410
- US-A1- 2012 048 634

## Description

### TECHNICAL FIELD

The present invention relates to bicycles, and more in particular to power-assisted electric bikes.

### BACKGROUND

In current related technique of electric bikes, the pedal torque sensing system and the motor reducer of a electric bicycle in the art are of an integral structure, and suspended in the middle of a special bicycle frame, which results in poor versatility. Besides, once the power system is removed, the assembly position of the pedal torque sensing system and the motor reducer needs to be recalibrated while reassembled; without a good assembly positioning reference, the reassembly-recalibration process is difficult to ensure that the power system is assembled in place.

US 2012/048634A1 discloses a bicycle generally includes a head pipe, a down frame, and a seat pipe. A rear fork extending rearwardly is disposed at a rear end of the down frame. A rear wheel (drive wheel) WR is journaled at a rear end of the rear fork. The down frame and the rear fork support an assist drive unit. The assist drive unit integrally holds, within a housing thereof, a brushless motor, a motor driver, a controller, a drive gear, an output shaft, and an assist sprocket. A crankshaft extending in a width direction of the bicycle body penetrates through the assist drive unit and a sprocket (output unit). A crank having a pedal and a crank having a pedal are connected to either side of the crankshaft. The sprocket, a chain, and the sprocket function as a drive system mechanism. To allow a large winding angle for the chain, an idler is disposed rearwardly of the assist sprocket. The control means is for controlling an output of the motor according to a torque value of a pedaling torque applied to the crankshaft as detected by a torque sensor. The bicycle further includes an annular hollow torque transmitting member inserted over an outer periphery of the crankshaft; and a one-way clutch, disposed on the hollow torque transmitting member. When a rider pedals the pedals a pedaling torque is applied to the crankshaft. The sprocket is rotated because of the pedaling torque applied to the crankshaft. The rotation of the sprocket is transmitted to a sprocket on the side of the rear wheel WR, which rotates the rear wheel WR.

The document US 2012/048634 represents the closest prior art, and discloses a power-assisted electric bicycle in accordance with the preamble of claim 1.

### SUMMARY

The present invention is directed to an improved power-assisted bicycle.

According to an aspect of the invention, a power-assisted bicycle is provided, comprising a frame including a bottom bracket and a chain stay connected; a rear wheel being rotatably mounted on the chain stay via a rear shaft; and a driving unit includes a central shaft, a pedal chain wheel, two pedal devices, a freewheel and a chain; wherein the central shaft is rotatably mounted in the bottom bracket and the pedal chain wheel is mounted on the central shaft, with the two pedal devices mounted at both ends thereof respectively; with the freewheel rotatably mounted on the rear shaft and cooperating with the rear wheel, so as to drive the rear wheel to rotate; the chain is connected with the pedal chain wheel and the freewheel, so as to transmit the driving force of the pedal chain wheel to the freewheel; and the electric power-assisted device includes a torque sensing unit and an electric power-assisted unit and a control unit; the torque sensing unit is installed inside the bottom bracket and cooperates with the central shaft, so as to sense the torque generated on the central shaft by the pedal devices; a control unit electrically connected with the torque sensing unit, according to the torque signal generated by the torque sensing unit, the control unit will transmit the control signal to electric power-assist unit; an electric power-assist unit mounted on the rear chain stay and cooperates with the chain, according to the size of control signal, the electric power-assist unit will indicate the corresponding driving force to the chain.

And the electric power-assisted unit includes a motor reducer mounted on the chain stay via the positioning mechanism; a drive chain wheel mounted on the output shaft of the motor reducer, and cooperates with the drive chain wheel; and a positioning mechanism.

And the chain stay includes a first beam and a second beam that are mounted at their ends on the bottom bracket, with a roughly - wedge-shaped mounting region formed closely to the bottom bracket at its narrower end and away from that at its wider end, in which the motor reducer is mounted via the positioning mechanism, used for mounting of the rear wheel.

And the positioning mechanism includes a first locking bolt nut and a pressing plate being arranged above and below the mounting region with the motor reducer respectively, and with being detachably connected with it via the first locking bolt nut.

And the pressing plate has a concave structure on its bottom for embedment of the mounting region, so as to prevent it from shifting in the mounting region from the narrow end to the wider end.

And the positioning mechanism includes at least one positioning block and at least one second locking bolt nut via which the positioning block is detachably fixed between the pressing plate and the motor reducer and between the first beam and the second beam, and tightly against inside of the first beam and the second beam, so as to prevent the pressing plate and the motor reducer from shifting in the mounting region from the wider end to the narrow end.

And at least one positioning block is detachably fixed on the motor reducer via the second locking bolt nut, with a through hole formed on at least one positioning block allowing the second locking bolt nut to go through, with the through hole in a waist-shaped so as to make the position of the positioning block relative to that of the motor reducer adjustable.

And a chute is formed on the bottom of at least one positioning block, and a positioning raise-deck cooperating with the chute is formed on the top of the motor reducer; wherein, the distance between the centerline of the positioning raised-deck and the drive chain wheel is equal to that between the centerline of the bottom bracket and that of the plane of the pedal chain wheel.

Preferably, the bottom bracket includes a cylindrical bottom bracket body connected at its side with the chain stay; as well as a left screw cap and a right screw cap mounted at both ends thereon; the central shaft goes through the bottom bracket body, and rotatably mounted on the left screw cap and the right screw cap, with the torque sensing unit sleeved thereon.

Preferably, the central shaft is further provided with an inner drive bevel gear connected with the pedal chain wheel connected with the inner drive bevel gear via a multi-chain slot.

The torque sensing unit of this power-assisted electric bicycle is mounted in the bottom bracket taken as the positioning reference, the electric power-assisted unit with the control unit is mounted thereon is mounted on the chain stay taken as the positioning reference, that is easy to ensure the accuracy of the mounting reference since the bottom bracket and the chain stay are relatively more stable, making the power parts of the power-assisted electric bicycle simplified in assembly and easy in disassembly.

Other features and advantages of the present invention will become apparent from the following detailed description of the invention made with reference to the accompanying drawings and embodiments.

### BRIEF DESCRIPTION OF THE DRAWINGS

Fig. 1 is a schematic drawing showing the dimensional structure of the power-assisted electric bicycle of the present invention;
Fig. 2 is a schematic drawing of the assembly relation between the pedal torque sensing unit and the bottom bracket of the power-assisted electric bicycle of the present invention;
Fig. 3 is an enlarged schematic drawing of the assembly relation of the electric power-assisted unit of the power-assisted electric bicycle of the present invention;
Fig. 4 is an exploded schematic drawing of the electric power-assisted unit of the power-assisted electric bicycle of the present invention.

### DETAILED DESCRIPTION OF EMBODIMENTS

For the clear understanding of the present invention regarding the technical characteristics, purposes and effect, the specific embodiments of the drawings as bellows.

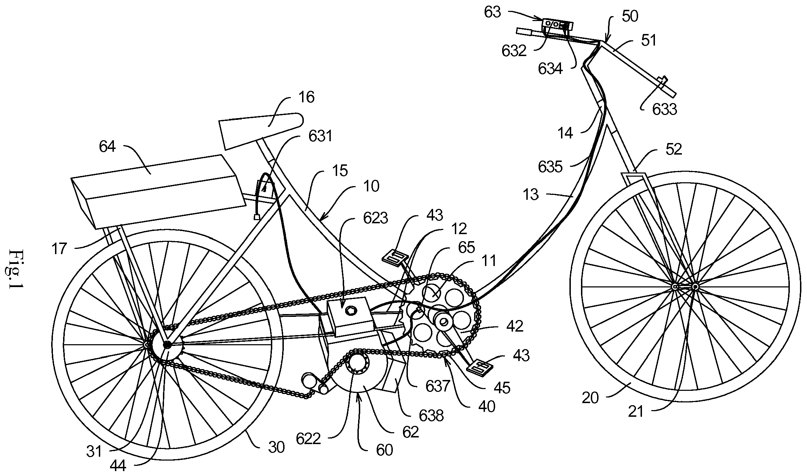

As shown in Fig. 1 , the power-assisted electric bicycle in some examples of the present invention may comprise a bicycle frame 10; a rear wheel 30 mounted at the rear of the frame 10; a driving unit 40 mounted between the frame and the rear wheel 30 for driving the rear wheel 30 to rotate; a steering device 50 mounted in front of the frame 10 for controlling the traveling direction of the power-assisted electric bicycle; an electric power-assisted device 60 mounted on the frame 10 and cooperates with the driving unit 40, so as to provide electric assisting power; and a front wheel 20 mounted on the steering device 50.

Besides, the frame 10 in some examples may include a bottom bracket 11; a chain stay 12 with a rear wheel 30 rotatably mounted to the terminal thereof via a rear shaft 31; an inclined beam 13 with a head tube 14 welded to the other end thereof, so as to allow the steering device 50 to be mounted rotatably thereon; a stem 15 with a seat 16 mounted at the other end thereof; and a rear seat 17 mounted above the rear wheel 30, and connected with the stem 15 and the chain stay 12; wherein the chain stay 12, the inclined beam 13 and the stem 15 can be welded at one end to the outer surface of the bottom bracket 11.

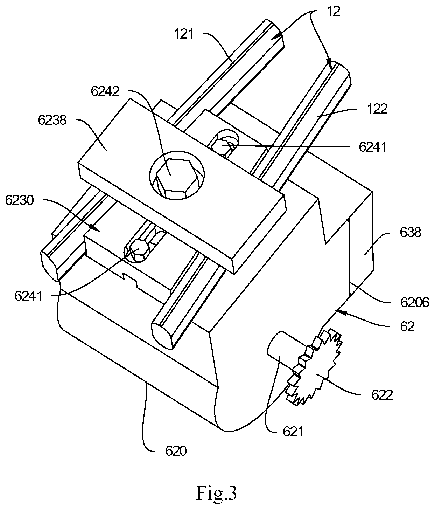

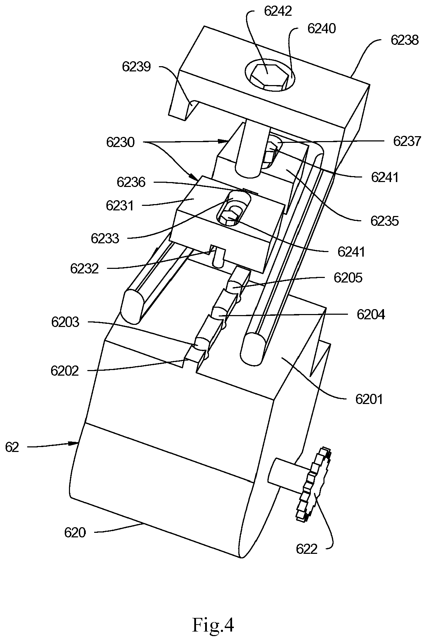

As shown in Figs. 3 and 4 , the chain stay 12 in some examples may include a first beam 121 and a second beam 122, which are connected at one end with the side of the bottom bracket 11, with a roughly wedge-shaped mounting region formed closely thereto at its narrow end, and away from that at its wider end.

The steering device 50 in some examples may include a handlebar 51 and a front fork 52 connected to form the portion for rotatably going through the head tube 14, so as to make the steering device 50 rotatable around the central axis of the head tube 14, thereby controlling the traveling direction of the front wheel 20 mounted on the lower end of the front fork 52 via a front shaft 21.

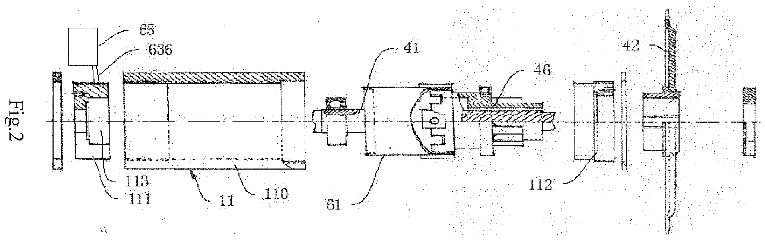

As shown in Fig. 2 , the driving unit 40 in some examples may include a central shaft 41 rotatably mounted in the bottom bracket 11 around its axis; a pedal chain wheel 42; two pedal devices 43 mounted at both ends of the central shaft 41 respectively, providing a rotating force for the pedal chain wheel 42; a freewheel 44 rotatably mounted on the rear shaft 31 and cooperates with the rear wheel 30, so as to drive the rear wheel 30 to rotate; a chain 45; and an inner drive bevel gear 46 sleeved onto the central shaft 41 via a multi-chain slot, thereby allowing quick disassembly of the pedal chain wheel 42 and the inner drive bevel gear 46; when working, a user pedals hard to make the pedal devices 43 drive the central shaft 41 to rotate, which further drives the pedal chain wheel 42 to rotate that transfers the force via the chain 45 to the freewheel 44 that mounted on the rear shaft 31 to drives the rear wheel 30 to rotate.

As shown in Figs. 1 and 2 , the electric power-assisted device 60 in some examples may include a torque sensing unit 61 mounted in the bottom bracket 11 and cooperates with the central shaft 41, so as to sense the value of the torque the user pedals; an electric power-assisted unit 62 mounted on the chain stay 12 and cooperates with the chain 45 of the driving unit 40, so as to provide a driving force for the chain 45; a control unit 63; a power supply 64 mounted on the rear seat 17 for providing power for other devices of the electric power-assisted device 60; and a signal receiver 65 mounted at the outside of the bottom bracket 11, and electrically connected with the torque sensing unit 61 via a signal wire 636, so as to receive the pedal torque information sensed by the torque sensing unit 61.

In some examples, the control unit 63 includes a power switch 631 mounted on the rear seat 17 near the power supply 64 for controlling the power supply switch of the power supply 64; a control panel 632 mounted on the handlebar 51 and provided with a switch key and a set key, which are used for controlling the power on/off of the electric power unit 62 and the riding mode setting; a speed regulator 633 mounted on the handlebar 51 for regulating the traveling speed; a screen 634 mounted on the control panel for displaying the remaining electrical quantity of the power supply, such that a user can keep track of the electrical quantity of a battery at any time, reasonably arrange usage of the motor reducer, and charge the battery in time, so as to avoid the situation in which no power is available when the motor reducer needs to be used to drive the boosting force; and a controller 638 mounted on a side of the motor reducer, so as to receive the data of torque of the signal receiver 65 via a data cable 637 and control the electric power-assisted unit 62 to output the corresponding driving force to the drive chain wheel 622, all of them are interconnected electrically, the signal cable 636 between the control unit 63 and the power supply 64 is mounted along the frame 10.

As shown in Fig. 2 , the bottom 11 in some examples may include a bottom bracket body 110 as well as a left screw cap 111 and a right screw cap 112 connected at both ends thereon, wherein the bottom bracket body 110 is cylindrical, having its axis run parallel to the axis of the front wheel 20 and the rear wheel 30, with its side wall connected with the end of the chain stay 12 and the inclined beam 13, and the left screw cap 111 and the right screw cap 112 are provided in their middle with a mounting hole 113 respectively, with the left screw cap 111 further provided with a lead wire hole through which the signal cable 636 goes.

The central shaft 41 can be rotatably mounted around its axis in the mounting hole 113 of the left screw cap 111 and the right screw cap 112; the torque sensing unit 61 is connected at an end with the inner drive bevel gear 46 of the driving unit 40, and sleeved together onto the central shaft 41, with the inner drive bevel gear 46 used for transferring the torque of the pedal chain wheel 42 to the torque sensing unit 61; the torque sensing unit 61 and the inner drive bevel gear 46 are rotatably mounted between the two mounting holes 113 of the left screw cap 111 and the right screw cap 112; the signal receiver 65 is generally mounted at the outside of the portion where the bottom bracket body 110 is connected with the left screw cap 111, and the torque sensing unit 61 transfers via the signal cable 636 the information of torque generated by the pedal device 43 for the central shaft 41 to the signal receiver 65.

The signal receiver 65 receives the information of torque of the torque sensing unit 61 and transfers it to the controller 638, which sends out a control instruction to the electric power-assisted unit 62 after the provided torque information data are processed, making the electric power-assisted unit 62 output the corresponding driving force to the chain 45; and the power supply 64 provides power for the torque sensing unit 61, the electric power-assisted unit 62, the control unit 63 and the signal receiver 65.

As shown in Figs. 3 and 4 , the electric power-assisted unit 62 in some examples may include a motor reducer 621 located below the first beam 121 and the second beam 122, so as to output the rotational power; a drive chain wheel 622 mounted on the output shaft of the motor reducer 621, at the same side of the motor bicycle with the pedal chain wheel 42 that also cooperates with the chain 45 of the driving unit 40, so as to transfer the rotational power outputted by the motor reducer 621 to the chain 45; and a positioning mechanism 623,via which the motor reducer 621 is fiexed on the above mounting region of the first beam 121 and the second beam 122.

The motor reducer 621 may also include a house 620 in some examples, which includes a mounting interface 6201 formed on the upper surface of the shell 620, and joint with the lower side of the first beam 121 and the second beam 122; a positioning raised-deck 6202 convexly mounted on the mounting interface 6201 and extends forward; and a side wall 6206 located on a side of the bottom bracket 11 on the house 620, and provided with a threaded hole for mounting the controller 638.

Preferably, the positioning raised-deck 6202 having its extending direction runs parallel to the plane where the drive chain wheel 622 is located, and the distance between the centerline of the positioning boss 6202 and the drive chain wheel 622 is equal to that between the centerline of the bottom bracket 11 and that of the plane of the pedal chain wheel 42; the mounting interface 6201 is further provided with a first lock-hole 6203, a second lock-hole 6204 and a third lock-hole 6205 cooperating with the positioning mechanism 623, all of which can be a threaded hole in some examples, and distributed at intervals on the centerline of the positioning raised-deck 6202.

Again as shown in Figs. 3 and 4 , the positioning mechanism 623 includes a positioning block 6230 mounted on the positioning raised-deck 6202 via the locking bolt nut 6241, and joint with the inner side of the first beam 121 and the second beam 122, so as to prevent the motor reducer 621 from drifting forward or toward both sides, i.e. preventing the motor reducer 621 from moving in the above mounting region from the wider end to the narrow end; a pressing plate 6238 mounted above the mounting region of the first beam 121 and the second beam 122, and connected with the second lock-hole 6204 in the reducer motor 621 via the locking member 6242, so as to prevent the motor reducer 621 from moving backward relative to the bicycle body, i.e. preventing the pressing plate 6238 from shifting in the mounting region from the narrow end to the wider end; and a locking boltnut 6241 and a locking bolt nut 6242,which may be bolts in some examples.

The positioning block 6230 in some examples may include a first positioning block 6231 and a second positioning block 6235 mounted at both ends of the positioning boss 6202 respectively, which may be of a trapezoidal structure adapted to the angle between the first beam 121 and the second beam 122, so as to ensure that the shell 620 can move neither forward nor sideward; the shape of the positioning block 6230 can also be designed according to the shape of the angle between the first beam 121 and the second beam 122 in a specific application, with serving to limit movement of the house 620 relative to the bicycle body; wherein, the first positioning block 6231 is provided on its lower surface with a first groove 6232 cooperating with the positioning raised-deck 6202, and a first connecting hole 6233 corresponding to the first lock-hole 6203, and the second positioning block 6235 is provided on its lower surface with a second groove 6236 cooperating with the positioning raised-deck 6202, and a third connecting hole 6237 corresponding to the third lock-hole 6205.

In this example, the first positioning block 6231 and the second positioning block 6235 can slide back and forth along the longitudinal direction of the positioning raised-deck 6202, so as to regulate the position of the first positioning block 6231 and the second positioning block 6235 relative to the house 620; the first connecting hole 6233 and the third connecting hole 6237 are connected with the first lock-hole 6203 and the third lock-hole 6205 on the house 620 via the locking bolt nut 6241 and 6242 respectively, that they are holes having waisted-shape, so that the first positioning block 6231 and the second positioning block 6235 can still be locked together with the house 620 when they are used to regulate the position along the positioning raised-deck 6202, thus achieving the purpose of joint positioning with the inner side of the first beam 121 and the second beam 122.

The joint face of the pressing plate 6238 with the first beam 121 and the second beam 122 is of a concave structure 6239, which here is a trapezoidal structure adapted to the angle between the first beam 121 and the second beam 122 , thus ensuring that the house 620 does not move backward, the concave structure 6239 can also be other concave structure corresponding to the corresponding beam of the bicycle, thereby ensuring a fixed position relative to the frame 10; the pressing plate 6238 is provided with a second connecting hole 6240 corresponding to the position of the second lock-hole 6204 of the house 620, with the locking bolt nut 6242 going through the second connecting hole 6240 to get locked together with the second lock-hole 6204, thereby connecting the pressing plate 6238 with the house 620.

The assembly process of the torque sensing unit 61, the electric power-assisted unit 62, the control unit 63, the power supply 64 and the signal receiver 65 of this power-assisted electric bicycle will further be described below with reference to Figs. 1-4 :

Step 1: Mounting the torque sensing unit 61, assembling the torque sensing unit 61 and the inner drive bevel gear 46 with the central shaft 41 as the base before inserted into the bottom bracket 11, and locking at both ends in the axial direction by the left screw cap 111 and the right screw cap 112, wherein the left screw cap 111 is provided with a notch used for leading out of the signal cable 636 on the signal receiver 65, with the signal cable 636 connecting the signal receiver 65 with the torque sensing unit 61 and getting them fixed at the outside of the bottom bracket body 110;

Step 2: locking the pedal chain wheel 42 at an end of the central shaft 41 at the same side with the freewheel 44, getting connected with the multi-key slot of the inner drive bevel gear 46 and locked with a nut, and then mounting the pedal devices 43, thus completing mounting of the torque sensing unit 61;

Step 3: mounting the electric power-assisted unit 62, mounting the first positioning block 6231 in the first lock-hole 6203 on the mounting face 6201 of the house 620 with the locking bolt nut 6241, and the second positioning block 6235 in the third lock-hole 6205 on the mounting face 6201 of the house 620 with the locking bolt nut 6241; the first groove 6232 and the second groove 6236 are fitted with the positioning raised-deck 6202, ensuring that the position is adjustable along the positioning raised-deck 6202; the shape of the first positioning block 6231 and the second positioning block 6235 after assembly matches the inside shape of the chain stay 12, and the drive chain wheel 622 of the motor 621 is at the same side of the bicycle with the pedal chain wheel 42 and the freewheel 44;

Step 4: putting the house 620 provided with the first positioning block 6231 and the second positioning block 6235 in Step 3 to the lower side of the chain stay 12, with the mounting interface 6201 jointing with the lower side of the chain stay 12, and the trapezoidal shape formed by the first positioning block 6231 and the second positioning block 6235 matching the inside of the chain stay 12;

Step 5: mounting the keep plate 6238 on the upper side of the chain stay 12, and getting connected with the second lock-hole 6204 of the house 620 via the locking bolt nut 6242, with the house 620 here suspended on the chain stay 12 via the pressing plate 6238;

Step 6: pushing the pressing plate 6238 backward along the surface of the chain stay 12, and adjusting the position of the house 620; when there is a close fit between the concave structure of the pressing plate 6238 and the chain stay 12 such that they cannot move, locking tightly the locking bolt nut 6242 of the second lock-hole 6204, and securing the position of the pressing plate 6238 and the house 620;

Step 7: pushing tightly the first positioning block 6231 and the second positioning block 6235 forward along the positioning raised-deck 6202 respectively; and adjusting the position thereof, so as to ensure that the trapezoidal side is jointed with the side of the chain stay 12 completely and locked tightly to the house 620; and then locking tightly the first positioning block 6231 and the second positioning block 6235 respectively; since the distance between the centerline of the positioning raised-deck 6202 and the drive chain wheel 622 is equal to that between that of the bottom bracket 11 and that of the plane of the pedal chain wheel 42, after the positioning mechanism 623 and the house 620 completely fixed, the drive chain wheel 622 on the drive shaft of the motor reducer 621 can then be ensured to be on the same plane with the pedal chain wheel 42 and the freewheel 44;

Step 8: mounting the chain 45, and enveloping and engaging the pedal chain wheel 42, the drive chain wheel 622 and the freewheel 44 with the chain 45, thus forming a closed drive chain system, allowing both the pedal chain wheel 42 and the drive chain wheel 622 to output a driving force to the freewheel 44;

Step 9: mounting the power switch 631, the control panel 632, the speed regulator 633, the controller 638 and the power supply 64 of the control unit 63; with the power supply 64 and the power switch 631 mounted on the rear seat 17 or the inclined beam 13; the control panel 632 and the speed regulator 633, for the sake of operation and observation, are generally mounted on the handlebar 51, with the controller 638 fixedly mounted on the side wall 6208 of the frame with a screw;

Step 10: connecting a signal cable 636, a data cable 637 and a power cable 635 among the torque sensing unit 61, the electric power-assisted unit 62, the control unit 63, the power supply 64 and the signal receiver 65, with the power cable 635 winding the frame 10 to get fixed; adjusting the commissioning of the motor bicycle, and making the appropriate adjustment.

Thus assembly of the torque sensing unit 61, the electric power-assisted unit 62, the control unit 63, the power supply 64, and the signal receiver 65 of the power-assisted electric bicycle are completed.

As described above, the motor reducer 621 of the power-assisted electric bicycle is completely fixed below the first beam 121 and the second beam 122, with the positioning mechanism 623 limiting the fixed position; the drive chain wheel 622 connected with the motor reducer 621 is also always kept in a plane relative to the position of the pedal chain wheel 42, thus achieving a good positioning effect, ensuring stability of power output of the motor reducer 621; when maintenance, disassembly or assembly is needed, the motor bicycle can effectively avoid difficulties of calibration and disassembly/assembly.

Meanwhile, users can modify the existing bicycle by themselves, without working on the frame of the existing bicycle; by substituting the electric power-assisted device 60 of the present utility model according to the above steps, a common bicycle can then be changed into a power-assisted electric bicycle, with the entire mounting process simple and fast, meeting the needs of users' DIY modifying a bicycle.

When the power-assisted electric bicycle is in operation, the cyclist pedals the pedal devices 43 of the bicycle to generate a torque on the central shaft 41; the torque sensing unit 61, after getting the pedal torque signal, obtains the data of torque through the signal receiver 65, and transfers them to the controller 638 at the same time, which, according to the data of torque, calculates the power needed to be outputted by the motor reducer 621, and controls it by a gentle increment; the power of the motor reducer 621 is transferred to the chain 45 via the drive chain wheel 622, thus driving the bicycle to go forward. If the power is to be cut off, just stop pedaling; the torque sensing unit 61 cannot receive the signal of torque of the central shaft 41, and the signal receiver 65 has no data to be received, either, with the controller 638 controlling the motor reducer 621 to stop operation in this case.

## Claims

1. A power-assisted electric bicycle comprises a frame (10), a rear wheel (30) and a driving unit (40), wherein, the frame (10) includes a bottom bracket (11) and a chain stay (12) connected, with the rear wheel (30) being rotatably mounted on the chain stay (12) via a rear shaft (31); the driving unit (40) includes a central shaft (41), a pedal chain wheel (42), two pedal devices (43), a freewheel (44) and a chain (45); the central shaft (41) is rotatably mounted in the bottom bracket (11), and the pedal chain wheel (42) is mounted on the central shaft (41), with the two pedal devices (43) mounted at both ends of the central shaft (41) thereof, respectively; the freewheel (44) is rotatably mounted on the rear shaft (31) and cooperates with the rear wheel (30), so as to drive the rear wheel (30) to rotate; the chain (45) is connected with the pedal chain wheel (42) and the freewheel (44), so as to transmit the driving force of the pedal chain wheel (42) to the freewheel (44); wherein, the power-assisted electric bicycle further includes an electric power-assisted device (60) which includes a torque sensing unit (61), an electric power-assisted unit (62) and a control unit (63); the torque sensing unit (61) is mounted in the bottom bracket (11) and cooperates with the central shaft (41), so as to sense the torque generated on the central shaft (41) by the pedal devices (43); the control unit (63) is electrically connected with the torque sensing unit (61), so as to output a control signal to the electric power-assisted unit (62) according to the information of torque sensed by the torque sensing unit (61); the electric power-assisted unit (62) is mounted on the chain stay (12) and cooperates with the chain (45), so as to output the corresponding driving force to the chain (45) according to the control signal;
the electric power-assisted unit (62) includes a motor reducer (621), a drive chain wheel (622) and a positioning mechanism (623); the drive chain wheel (622) is mounted on the output shaft of the motor reducer (621), and cooperates with the drive chain wheel (622); the motor reducer (621) is mounted on the chain stay (12) via the positioning mechanism (623);
wherein the chain stay (12) includes a first beam (121) and a second beam (122) used for mounting mounted on of the rear wheel (30); the first beam (121) and the second beam (122) are mounted at their ends on the bottom bracket (11), with a roughly wedge-shaped mounting region formed closely to the bottom bracket (11) at its narrow end, and away from that at its wider end; the motor reducer (621) is mounted in the mounting region via the positioning mechanism (623);
wherein the positioning mechanism (623) includes a pressing plate (6238) and a first locking bolt nut (6242), the pressing plate (6238) and the motor reducer (621) being arranged above and below the mounting region respectively; and the pressing plate (6238) is detachably connected with the motor reducer (621) via the first locking bolt nut (6242);
and **characterised in that** the pressing plate (6238) has a concave structure (6239) on its bottom for embedment of the mounting region, so as to prevent the pressing plate (6238) from shifting in the mounting region from the narrow end to the wider end;
wherein the positioning mechanism (623) includes at least one positioning block (6230) and at least one second locking member (6241); with which the positioning block (6230) is detachably fixed via the at least one second locking bolt nut (6241) between the pressing plate (6238) and the motor reducer (621) and between the first beam (121) and the second beam (122), and tightly against inside of the first beam (121) and the second beam (122), so as to prevent the pressing plate (6238) and the motor reducer (621) from shifting in the mounting region from the wider end to the narrow end;
wherein the at least one positioning block (6230) is detachably fixed on the motor reducer (621) via the second locking bolt nut (6241), and a through hole is formed on at least one positioning block (6230) allowing the second locking bolt nut (6241) to go through, with the through hole in a waist shaped so as to make the position of the positioning block relative to that of the motor reducer (621) adjustable;
wherein a chute is formed on the bottom of at least one positioning block (6230), and a positioning raised-deck (6202) cooperating with the chute is formed on the top of the motor reducer (621); the distance between the centerline of the positioning raised-deck (6202) and the drive chain wheel (622) is equal to that between the centerline of the bottom bracket (11) and that of the plane of the pedal chain wheel (42).

2. The power-assisted electric bicycle according to claim 1, wherein the bottom bracket (11) includes a cylindrical bottom bracket body (110) as well as a left screw cap (111) and a right screw cap (112) mounted at both ends thereof, which is connected at its side with the chain stay (12); Step (C) includes Step (K): the central shaft (41) goes through the bottom bracket body (110), and is rotatably mounted on the left screw cap (111) and the right screw cap (112), with the torque sensing unit (61) sleeved on the central shaft (41).

3. The power-assisted electric bicycle according to claim 2, wherein, Step (C) includes Step (L): the central shaft (41) is further provided with an inner drive bevel gear (46), which is connected with the pedal chain wheel (42) connected with the inner drive bevel gear (46) via a multi-chain slot.

## Patentansprüche

1. Ein motorunterstütztes Elektrofahrrad umfasst einen Rahmen (10), ein Hinterrad (30) und eine Antriebseinheit (40), wobei der Rahmen (10) verbunden einen Tretlager (11) und eine Kettenstrebe (12) aufweist, das Hinterrad (30) an der Kettenstrebe (12) über eine hintere Welle (31) drehbar montiert ist; die Antriebseinheit (40) eine zentrale Welle (41), ein Pedalkettenrad (42), zwei Pedalvorrichtungen (43), einen Freilauf (44) und eine Kette (45) enthält; die zentrale Welle (41) drehbar in dem Tretlager (11) montiert ist, und das Pedalkettenrad (42) auf der zentralen Welle (41) montiert ist, wobei die beiden Pedalvorrichtungen (43) jeweils an beiden Enden der zentralen Welle (41) angebracht sind; der Freilauf (44) drehbar an der hinteren Welle (31) montiert ist und mit dem Hinterrad (30) kooperiert, um das Hinterrad (30) zum Drehen anzutreiben; die Kette (45) mit dem Pedalkettenrad (42) und dem Freilauf (44) verbunden ist, um die Antriebskraft des Pedalkettenrads (42) zu dem Freilauf (44) zu übertragen; wobei das motorunterstütztes Elektrofahrrad ferner eine elektrische Hilfskraftvorrichtung (60) enthält, die eine Drehmomenterfassungseinheit (61) eine elektrische Hilfskrafteinheit (62) und eine Steuereinheit (63) umfasst; die Drehmomenterfassungseinheit (61) in dem Tretlager (11) montiert ist und mit der zentralen Welle (41) kooperiert, um den auf der zentralen Welle (41) durch den Pedalvorrichtungen (43) erzeugten Drehmoment zu erfassen; die Steuereinheit (63) mit der Drehmomenterfassungseinheit (61) elektrisch verbunden ist, um ein Steuersignal zu der elektrischen Hilfskrafteinheit (62) gemäss den Informationen des durch die Drehmomenterfassungseinheit (61) erfassten Drehmoments auszugeben; die elektrische Hilfskrafteinheit (62) an der Kettenstrebe (12) montiert ist und mit der Kette (45) kooperiert, um die entsprechende Antriebskraft auf die Kette (45) gemäß dem Steuersignal auszugeben;
die elektrische Hilfskrafteinheit (62) ein Motoruntersetzungsgetriebe (621), ein Antriebskettenrad (622) und einen Positionierungsmechanismus (623) enthält; das Antriebskettenrad (622) auf der Abtriebswelle des Motoruntersetzungsgetriebe (621) angebracht ist, und mit dem Antriebskettenrad (622) kooperiert; das Motoruntersetzungsgetriebe (621) an der Kettenstrebe (12) über den Positionierungsmechanismus (623) montiert ist;
wobei die Kettenstrebe (12) einen ersten Träger (121) und einen zweiten Träger (122) enthält, die zur Anbringung des Hinterrads (30) benutzt werden; der erste Träger (121) und der zweite Träger (122) an ihren Enden an dem Tretlager (11) montiert sind, wobei ein etwa keilförmiger Befestigungsbereich eng mit dem Tretlager (11) an dessen schmalen Ende und entfernt von dem an dessen breiteren Ende gebildet ist; das Motoruntersetzungsgetriebe (621) in dem Befestigungsbereich über den Positionierungsmechanismus (623) montiert ist;
wobei der Positionierungsmechanismus (623) eine Pressplatte (6238) und eine erste Verriegelungsbolzenmutter (6242) enthält, die Druckplatte (6238) und das Motoruntersetzungsgetriebe (621) jeweils oberhalb und unterhalb des Befestigungsbereichs angeordnet sind; und die Druckplatte (6238) lösbar mit dem Motoruntersetzungsgetriebe (621) über die erste Verriegelungsbolzenmutter (6242) verbunden ist;
und **dadurch gekennzeichnet, dass** die Druckplatte (6238) eine konkave Struktur (6239) an seiner Unterseite zur Einschliessung des Montagebereichs hat, um die Druckplatte (6238) im Montagebereich vom Verschieben von dem schmalen Ende zu dem breiteren Ende zu verhindern;
wobei der Positionierungsmechanismus (623) mindestens einen Positionierungsblock (6230) und mindestens ein zweites Verriegelungselement (6241) enthält; mit dem der Positionierungsblock (6230) lösbar über die zumindest eine zweite Verriegelungsbolzenmutter (6241) zwischen der Druckplatte (6238) und dem Motoruntersetzungsgetriebe (621) und zwischen dem ersten Träger (121) und dem zweiten Träger (122) und dicht gegen Innenseite des ersten Trägers (121) und des zweiten Trägers (122) fixiert wird, um die Druckplatte (6238) und das Motoruntersetzungsgetriebe (621) im Montagebereich vom Verschieben von dem breiteren Ende zu dem schmalen Ende zu verhindern;
wobei der mindestens eine Positionierungsblock (6230) lösbar auf dem Motoruntersetzungsgetriebe (621) über die zweite Verriegelungsbolzenmutter (6241) befestigt ist, und ein Durchgangsloch zumindest an zumindest einem Positionierungsblock (6230) gebildet ist, um ein Durchlaufen der zweiten Verriegelungsbolzenmutter (6241) zu ermöglichen, wobei das Durchgangsloch zu einem Taillen geformt ist, um die Position des Positionierungsblocks relativ zu der des Motoruntersetzungsgetriebe (621) einstellbar zu machen;
wobei eine Rinne an der Unterseite des mindestens einen Positionierungsblocks (6230) gebildet ist, und ein positionierendes angehobenes mit der Rinne kooperierendes Deck (6202) auf der Oberseite des Motoruntersetzungsgetriebe (621) gebildet ist; der Abstand zwischen der Mittellinie des positionierenden angehobenen Deck (6202) und des Antriebskettenrades (622) gleich dem zwischen der Mittellinie des Tretlagers (11) und der der Ebene des Pedalkettenrades (42) ist.

2. Das motorunterstützte Elektrofahrrad nach Anspruch 1, wobei der Trettlager (11) einen zylindrischen Trettlagerkörper (110) sowie eine linke Schraubkappe (111) und eine rechte Schraubkappe (112) enthält, die an seinen beiden Enden angebracht sind, der an seiner Seite mit der Kettenstrebe (12) verbunden ist; Schritt (C) Schritt (K) umfasst: die zentrale Welle (41) durch den Trettlagerkörper (110) verläuft, und drehbar an der linken Schraubkappe (111) und der rechten Schraubkappe (112) angebracht ist, wobei die Drehmomenterfassungseinheit (61) auf der zentralen Welle (41) aufgeschoben ist.

3. Das motorunterstützte Elektrofahrrad nach Anspruch 2, wobei Schritt (C) Schritt (L) umfasst: die zentrale Welle (41) ferner mit einem inneren Antriebskegelzahnrad (46) vorgesehen ist, die mit dem mit dem inneren Antriebskegelzahnrad (46) über einen mehrkettigen Slot verbundenen Pedalkettenrad (42) verbunden ist.

## Revendications

1. Une bicyclette assistée électrique comprend un châssis (10), une roue arrière (30) et une unité d'entraînement (40), dans lequel le cadre (10) comprend un boîtier de pédalier (11) et une fourche arrière (12) reliée, avec la roue arrière (30) étant monté de manière rotative sur la fourche arrière (12) par l'intermédiaire d'un arbre arrière (31); la transmission (40) comprend un arbre central (41), une roue à chaîne de pédale (42), deux dispositifs de pédale (43), une roue libre (44) et une chaîne (45); l'arbre central (41) est monté de manière rotative dans le boîtier de pédalier (11) et la roue à chaîne de pédale (42) est monté sur l'arbre central (41), les deux dispositifs de pédale (43) montés aux deux extrémités de la partie centrale arbre (41) de celui-ci, respectivement; la roue libre (44) est monté de manière rotative sur l'arbre arrière (31) et coopère avec la roue arrière (30), de manière à entraîner la roue arrière (30) en rotation; la chaîne (45) est relié à la roue dentée de pédale (42) et la roue libre (44), de manière à transmettre la force motrice de la roue à chaîne de pédale (42) à la roue libre (44); dans lequel, la bicyclette assistée électrique comprend en outre un dispositif d'assistée électrique (60) qui comprend une unité de détection de couple (61), une unité d'assistée électrique (62) et une unité de commande (63); l'unité de détection de couple (61) est monté dans le boîtier de pédalier (11) et coopère avec l'arbre central (41), de manière à détecter le couple généré sur l'arbre central (41) par les dispositifs de pédale (43); l'unité de commande (63) est connectée électriquement à l'unité de détection de couple (61), de façon à délivrer en sortie un signal de commande à l'unité d'assistée électrique (62) selon les informations de couple détectée par l'unité de détection de couple (61); l'unité d'assistée électrique (62) est monté sur la fourche arrière (12) et coopère avec la chaîne (45), de façon à délivrer en sortie la force motrice à la chaîne (45) correspondant en fonction du signal de commande;
l'unité d'assistée électrique (62) comprend un réducteur de moteur (621), une roue dentée d'entraînement (622) et un mécanisme de positionnement (623); la roue dentée d'entraînement (622) est monté sur l'arbre de sortie du réducteur de moteur (621) et coopère avec la roue dentée d'entraînement (622); le réducteur de moteur (621) est monté sur la fourche arrière (12) par l'intermédiaire du mécanisme de positionnement (623);
dans lequel la fourche arrière (12) comprend un premier support (121) et un second support (122) utilisé pour le montage monté sur la roue arrière (30); le premier support (121) et le second support (122) sont montées à leurs extrémités sur le boîtier de pédalier (11), avec une région montage à peu près cunéiforme formée près du boîtier de pédalier (11) à son extrémité étroite, et à l'écart de celle à son extrémité la plus large; le réducteur de moteur (621) est monté dans la région de montage par l'intermédiaire du mécanisme de positionnement (623);
dans lequel le mécanisme de positionnement (623) comprend une plaque de pression (6238) et un premier écrou de boulon de verrouillage (6242), la plaque de pression (6238) et le réducteur de moteur (621) étant agencé au-dessus et au-dessous de la zone de montage, respectivement; et la plaque de pression (6238) est relié de manière amovible avec le réducteur de moteur (621) par l'intermédiaire du premier écrou de boulon de verrouillage (6242);
et **caractérisé en ce que** la plaque de pression (6238) présente une structure concave (6239) sur son fond pour l'encastrement de la zone de montage, de manière à empêcher la plaque de pression (6238) de se déplacer dans le montage région de l'extrémité étroite à l'extrémité la plus large;
dans lequel le mécanisme de positionnement (623) comprend au moins un bloc de positionnement (6230) et au moins un second élément de verrouillage (6241); avec lequel le bloc de positionnement (6230) est fixé de façon amovible par l'intermédiaire d'au moins un deuxième écrou de boulon de verrouillage (6241) entre la plaque de pression (6238) et le réducteur de moteur (621) et entre le premier support (121) et le second support ( 122), et fermement contre l'intérieur du premier support (121) et le second support (122), de manière à empêcher la plaque de pression (6238) et le réducteur de moteur (621) de se déplacer dans la zone de montage de l'extrémité la plus large à l'extrémité étroite;
dans lequel le au moins un bloc de positionnement (6230) est fixé de façon amovible sur le moto-réducteur (621) par l'intermédiaire du second écrou de boulon de verrouillage (6241), et un trou traversant est formé sur au moins un bloc de positionnement (6230) permettant le second écrou de boulon de verrouillage (6241) pour passer à travers, le trou traversant dans une ceinture formée de manière à rendre la position du bloc de positionnement par rapport à celui du moto-réducteur (621) réglable;
dans lequel une goulotte est formée sur le fond d'au moins un bloc de positionnement (6230), et une position relevée pont (6202) qui coopère avec la glissière est formée sur la partie supérieure du moteur un réducteur (621); la distance entre la ligne centrale de la surélevé plate-forme de positionnement (6202) et la roue dentée d'entraînement (622) est égale à celle qui sépare la ligne médiane du boîtier de pédalier (11) et celle du plan de la roue de chaîne de pédale (42).

2. La bicyclette assistée électrique selon la revendication 1, dans lequel le boîtier de pédalier (11) comprend un corps du boîtier de pédalier cylindrique (110), ainsi qu'un bouchon à vis gauche (111) et un bouchon fileté à droite (112) monté de façon aux deux extrémités de celui-ci, qui est relié à son côté avec la fourche arrière (12); l'étape (C) comprend l'étape (K): l'arbre central (41) passe à travers le corps du boîtier de pédalier (110), et est monté à rotation sur le bouchon fileté à gauche (111) et le bouchon fileté à droite (112), le couple unité de détection de couple (61) emmanché sur l'arbre central (41).

3. La bicyclette assistée électrique selon la revendication 2, dans lequel, l'étape (C) comprend l'étape (L): l'arbre central (41) est en outre pourvu d'un engrenage conique d'entraînement intérieur (46), qui est relié à la roue dentée de la pédale (42) raccordé à l'engrenage conique d'entraînement intérieur (46) par l'intermédiaire d'une fente à chaînes multiples.
